# EUROPÄISCHE PATENTSCHRIFT

(11) **EP 3 856 465 B1**
(45) Veröffentlichungstag und Bekanntmachung des Hinweises auf die Patenterteilung: **01.01.2025**
(21) Anmeldenummer: 19769411.0
(22) Anmeldetag: 10.09.2019
(51) Int. Cl.: B25J 9/00, B25J 13/08, G05B 19/423

(54) **ROBOTER-HANDFÜHRGERÄT**
ROBOT HAND GUIDE DEVICE
APPAREIL DE GUIDAGE MANUEL ROBOTISÉ

(30) Priorität: 28.09.2018 DE 102018216692
(43) Veröffentlichungstag der Anmeldung: 04.08.2021
(73) Patentinhaber: KUKA Deutschland GmbH, 86165 Augsburg (DE)
(72) Erfinder: NITZ, Gernot, 86368 Gersthofen (DE); OSTROVSKI, Sergiy, 86150 Augsburg (DE); TSCHARNUTER, Dietmar, 86316 Friedberg (DE)
(74) Vertreter: Oelke, Jochen
(86) Internationale Anmeldenummer: PCT/EP2019/074025
(87) Internationale Veröffentlichungsnummer: WO 2020/064318

(56) Entgegenhaltungen:
- WO-A1-2017/060540
- DE-A1- 102016 222 675
- DE-A1- 102018 000 467
- DE-B3- 102015 200 514
- JP-A- H11 231 925

## Beschreibung

Die Erfindung betrifft ein Roboter-Handführgerät, aufweisend einen ersten Anschlussflansch, der zum Verbinden des Roboter-Handführgeräts mit einem Werkzeugflansch eines Roboterarms ausgebildet ist, einen zweiten Anschlussflansch, der ausgebildet ist zur Befestigung eines vom Roboterarm handzuhabenden Werkzeugs an dem Roboter-Handführgerät, eine Übertragungsvorrichtung, die ausgebildet ist, Kräfte und Momente zwischen dem ersten Anschlussflansch und dem zweiten Anschlussflansch zu übertragen und eine an der Übertragungsvorrichtung angebrachte Sensoreinrichtung, die ausgebildet ist, die über die Übertragungsvorrichtung übertragenen Kräfte und Momente zu erfassen.

Die JP H11 231925 A zeigt ein solches Roboter-Handführgerät mit einer Robotersteuerung durch einen an einem Roboterarm angebrachten, nicht lösbaren Führungshandgriff.

Die DE 10 2016 222675 A1 beschreibt ein Roboterbedienhandgerät zum manuellen Handführen eines Roboterarms durch manuelles Einwirken auf einen Handgriff des an dem Roboterarm mechanisch gekoppelten Roboterbedienhandgeräts.

Die WO 2017/060540 A1 zeigt ein Robotersystem mit zumindest einem Roboterarm und einer Anzeigevorrichtung und einer an dem Roboterarm angebrachten Eingabevorrichtung auf, welche nicht lösbar mit dem Roboterarm verbunden ist.

DE 10 2015 200 514 B3 beschreibt eine Kraft-/Momenten-Sensorvorrichtung, aufweisend einen ersten Anschlussflansch mit mehreren Flanschbohrungen eines ersten Bohrbildes, einen zweiten Anschlussflansch mit mehreren Flanschgewindebohrungen eines mit dem ersten Bohrbild fluchtenden zweiten Bohrbildes und wenigstens einen den ersten Anschlussflansch mit dem zweiten Anschlussflansch verbindenden Verformungsabschnitt, der wenigstens einen Verformungsaufnehmer aufweist, der mit einer Auswerteinrichtung verbunden ist, wobei die Flanschgewindebohrungen des zweiten Anschlussflansches jeweils einen Durchmesser aufweisen, der größer ist, als der Durchmesser der jeweilig fluchtenden Flanschbohrung des ersten Anschlussflansches und zwar mindestens derart größer ist, dass Befestigungsschrauben, welche zum Anflanschen des ersten Anschlussflansches sich in die Flanschbohrungen des ersten Anschlussflansches nur mit ihren Gewindeschäften einstecken lassen und sich durch die Flanschgewindebohrungen des zweiten Anschlussflansches auch mit ihren Schraubköpfen hindurchführen lassen.

Aufgabe der Erfindung ist es, ein Roboter-Handführgerät zu schaffen, mit dem ein Roboterarm besonders flexibel und positionsgenau manuell geführt und programmiert werden kann.

Diese Aufgabe wird erfindungsgemäß gelöst durch ein Roboter-Handführgerät gemäß Anspruch 1.

Ein Roboter-Handführgerät dient im Allgemeinen dazu, einen Roboterarm, der in einer anderen Betriebsart mittels einer Robotersteuerung auch automatisch, insbesondere gemäß einem Roboterprogramm angesteuert werden kann, in der Betriebsart des Handführens durch ein manuelles Führen des Roboterarms durch eine Person auch von Hand verstellen zu können. Insbesondere dient ein Roboter-Handführgerät dazu, einen Werkzeugflansch des Roboterarms im Raum manuell zu bewegen und zu verstellen, wobei die einzelnen Gelenke des Roboterarms elektromotorisch angetrieben, der manuell veranlassten Bewegung des Werkzeugflansches folgen. Die Gelenke des Roboterarms werden insoweit (halb-)automatisch verstellt und zwar angesteuert durch die Robotersteuerung in Verbindung mit entsprechenden Antriebsverstärkern. Damit ein handgeführtes Bewegen des Werkzeugflansches überhaupt manuell möglich ist, müssen Kräfte und/oder Momente, die eine Person beispielsweise über einen Handgriff des Roboter-Handführgeräts in das Roboter-Handführgerät einleitet hinsichtlich ihren Richtungen, Orientierungen und/oder Beträgen erfasst werden. Denn die Glieder des Roboterarms werden nicht durch die menschliche Kraft der führenden Person bewegt, d.h. verstellt, sondern, wie bereits erwähnt, durch die den Gelenken des Roboterarms zugeordneten Motoren, die von der Robotersteuerung angesteuert werden. Insoweit benötigt die Robotersteuerung Informationen über die Kräfte und/oder Momente, die eine Person beispielsweise über einen Handgriff des Roboter-Handführgeräts in das Roboter-Handführgerät einleitet, hinsichtlich ihren Richtungen, Orientierungen und/oder Beträgen, um auf deren Grundlage die Gelenke des Roboterarms entsprechend (halbautomatisch ansteuern zu können.

Um die von einer Person über den Handgriff in das Roboter-Handführgerät eingeleiteten Kräfte und/oder Momente hinsichtlich ihren Richtungen, Orientierungen und/oder Beträgen erfassen zu können, verfügt das Roboter-Handführgerät über wenigstens eine Sensoreinrichtung, welche die über den Handgriff in das Roboter-Handführgerät eingeleiteten Kräfte und/oder Momente erfasst. Eine solches Roboter-Handführgerät bzw. eine solche Sensoreinrichtung ist im Allgemeinen beispielsweise aus der DE 10 2015 200 514 B3 bekannt.

Die Übertragungsvorrichtung gemäß der vorliegenden Erfindung kann insoweit mehrere Verformungsabschnitte und zugehöriger Sensoren, wie Dehnmessstreifen(DMS) aufweisen, wie sie in DE 10 2015 200 514 B3 offenbart sind. Die Verformungsabschnitte sind entsprechend gestaltet und verbinden den ersten Anschlussflansch mit dem zweiten Anschlussflansch derart, dass Kräfte und/oder Momente, die eine Person beispielsweise über einen Handgriff des Roboter-Handführgeräts in das Roboter-Handführgerät einleitet, zu spezifischen Verformungen, insbesondere Verbiegungen der Verformungsabschnitte führen. Diese Verformungen, insbesondere Verbiegungen werden dann von den Verformungsaufnehmern, d.h. Sensoreinrichtungen erfasst.

Die Übertragungsvorrichtung kann mehrere Verformungsabschnitte aufweisen und jeder Verformungsabschnitt kann mehrere Verformungsaufnehmer aufweisen.

Die Sensoreinrichtung kann zur eindimensionalen oder mehrdimensionalen Erfassung von Kräften und/oder Momenten ausgebildet sein. Beispielsweise kann die Sensoreinrichtung zur sechsdimensionalen Erfassung ausgebildet sein, insbesondere zur Erfassung von Kräften in den drei kartesischen Raumrichtungen und zur Erfassung von Momenten um die drei kartesischen Raumrichtungen.

Die ein oder mehreren Verformungsabschnitte können von Biegeabschnitten, insbesondere stegförmigen Biegeabschnitten gebildet werden, welche die beiden Anschlussflansche verbinden, insbesondere können die ein oder mehreren Verformungsabschnitte einteilig mit den beiden Anschlussflanschen ausgebildet, insbesondere aus einem Stück, d.h. aus dem Vollen gefertigt sein.

Die Sensoreinrichtung kann beispielsweise mehrere eindimensionale oder mehrdimensionale DMS-Messstreifen bzw. DMS-Messfelder aufweisen. Ein einzelner Verformungsaufnehmer kann beispielsweise ein eindimensionaler oder mehrdimensionaler DMS-Messstreifen bzw. ein DMS-Messfeld sein.

Das erste Anschlussmittel kann unmittelbar an dem ersten Anschlussflansch angeordnet sein. Das erste Anschlussmittel muss jedoch nicht unmittelbar direkt an dem ersten Anschlussflansch befestigt sein. Vielmehr kann das erste Anschlussmittel auch an einem vom ersten Anschlussflansch verschiedenen Bauteil des Roboter-Handführgeräts angeordnet sein, sofern dieses Bauteil starr mit dem ersten Anschlussflansch verbunden ist. Funktionell ist das erste Anschlussmittel derart auszubilden, dass Kräfte und/oder Momente, die eine Person mittels des an das erste Anschlussmittel angeschlossenen Führungshandgriffes in das erste Anschlussmittel einleitet, unverändert, d.h. unverfälscht in den ersten Anschlussflansch weitergeleitet werden.

Indem das Roboter-Handführgerät wenigstens ein erstes Anschlussmittel aufweist, das mit dem ersten Anschlussflansch verbunden ist, und das wenigstens eine erste Anschlussmittel ausgebildet ist zum lösbaren Anschließen eines Führungshandgriffes des Roboter-Handführgerätes an den ersten Anschlussflansch, wird ein Roboter-Handführgerät geschaffen, mit dem ein Roboterarm besonders flexibel und positionsgenau manuell geführt und programmiert werden kann.

Die Lösbarkeit des Führungshandgriffes von dem Anschlussflansch weist mehrere Vorteile auf. So kann der Führungshandgriff in der grundlegenden Ausgestaltung von dem Roboter-Handführgerät einfach gelöst werden, wodurch sich die Außenkontur des Roboter-Handführgeräts verkleinert, wenn der Führungshandgriff nicht benötigt wird, beispielsweise dann, wenn der Roboterarm mittels der Robotersteuerung in einem Automatikbetrieb gemäß einem Roboterprogramm automatisch angesteuert bewegt wird, ohne dass ein manuelles Handführen erfolgt.

In den im Folgenden noch näher beschriebenen weiteren Ausführungsformen können aufgrund der Lösbarkeit des Führungshandgriffs sich noch weitere Vorteile ergeben. So kann im Falle von mehreren ersten Anschlussmitteln oder mehreren zweiten Anschlussmitteln, der Führungshandgriff wahlweise an verschiedenen Stellen desselben Anschlussflansches, d.h. des ersten Anschlussflansches bzw. des zweiten Anschlussflansches angebracht werden. So kann beispielsweise in Abhängigkeit des Standortes einer den Roboter bedienenden Person relativ zum Roboterarm, beispielsweise rechts vom Roboterarm oder links vom Roboterarm stehend, der Führungshandgriff an einer Seite des jeweiligen Anschlussflansches angebracht werden oder an einer anderen, beispielsweise gegenüberliegenden Seite des jeweiligen Anschlussflansches angebracht werden, je nachdem, wo die Person sich aufhält.

Das zweite Anschlussmittel kann unmittelbar an dem zweiten Anschlussflansch angeordnet sein. Das zweite Anschlussmittel muss jedoch nicht unmittelbar direkt an dem zweiten Anschlussflansch befestigt sein. Vielmehr kann das zweite Anschlussmittel auch an einem vom zweiten Anschlussflansch verschiedenen Bauteil des Roboter-Handführgeräts angeordnet sein, sofern dieses Bauteil starr mit dem zweiten Anschlussflansch verbunden ist. Funktionell ist das zweite Anschlussmittel derart auszubilden, dass Kräfte und/oder Momente, die eine Person mittels des an das zweite Anschlussmittel angeschlossenen Führungshandgriffes in das zweite Anschlussmittel einleitet, unverändert, d.h. unverfälscht in den zweiten Anschlussflansch weitergeleitet werden.

Indem das wenigstens eine erste Anschlussmittel und das wenigstens eine zweite Anschlussmittel ausgebildet sind zum wahlweisen lösbaren Anschließen eines Führungshandgriffes des Roboter-Handführgerätes an den ersten Anschlussflansch oder den zweiten Anschlussflansch, können die Kräfte und/oder Momente, die ein Person über den Führungshandgriff in das Roboter-Handführgerät einleitet, wahlweise zwischen dem Werkzeugflansch des Roboters und der Sensoreinrichtung des Roboter-Handführgeräts eingeleitet werden oder zwischen der Sensoreinrichtung und dem Werkzeug eingeleitet werden.

Wenn der Führungshandgriff derart am Roboter-Handführgerät angeschlossen ist, dass der Führungshandgriff zwischen dem Werkzeugflansch des Roboters und der Sensoreinrichtung des Roboter-Handführgeräts angeordnet ist, können Prozesskräfte und/oder Prozessmomente von der Sensoreinrichtung erfasst werden, wenn durch Bewegen des Führungshandgriffes das am Roboterarm angeschlossene Roboter-Handführgerät zusammen mit dem Roboterarm bewegt wird und dabei ein an dem Roboter-Handführgerät angeschlossenes Werkzeug gehandhabt wird. Das manuelle Bewegen der Gelenke des Roboterarms kann dabei beispielsweise auf Basis von Gelenkmomentsensoren des Roboterarms selbst erfolgen oder durch Auswerten der Motorströme der Gelenksmotoren des Roboterarms, die den jeweiligen Gelenken des Roboterarms zugeordnet sind.

Wenn der Führungshandgriff derart am Roboter-Handführgerät angeschlossen ist, dass der Führungshandgriff zwischen der Sensoreinrichtung und dem Werkzeug angeordnet ist, kann der Roboterarm auf Grundlage der Sensorsignale der Sensoreinrichtung in einem Handführbetrieb in seinen Gelenkbewegungen gesteuert werden. In diesem Fall benötigt der Roboterarm selbst keine entsprechenden Sensoren, wie Gelenkmomentsensoren. Ohne eine zweite Sensoreinrichtung ist es dann jedoch nicht möglich mittels des Roboter-Handführgeräts Prozesskräfte und/oder Prozessmomente des Werkzeugs zu erfassen.

Wenn eine zusätzliche Erfassung von Prozesskräften und/oder Prozessmomenten des Werkzeugs gewünscht ist, kann das Roboter-Handführgerät, wie im Folgenden noch beschrieben wird, durch eine zweite Sensoreinrichtung ergänzt werden, so dass sowohl ein Handführbetrieb mittels des Roboter-Handführgeräts möglich ist und gleichzeitig eine Erfassung von Prozesskräften und/oder Prozessmomenten des Werkzeugs stattfinden kann.

Das erste Anschlussmittel und das zweite Anschlussmittel können jeweils eine mechanische Kupplungsvorrichtung aufweisen, die ausgebildet sind zum kraftschlüssigen und/oder formschlüssigen mechanischen Verbinden des Führungshandgriffes wahlweise mit dem jeweiligen ersten Anschlussflansch oder zweiten Anschlussflansch.

Über die mechanische Kupplungsvorrichtung werden die Kräfte und/oder Momente, die eine Person mittels des an das jeweilige Anschlussmittel angeschlossenen Führungshandgriffes in das Anschlussmittel einleitet, unverändert, d.h. unverfälscht in den zugeordnete Anschlussflansch weitergeleitet.

Die jeweilige mechanische Kupplungsvorrichtung des ersten Anschlussmittels und des zweiten Anschlussmittels können eine mechanische Sicherheitseinrichtung aufweisen, die ausgebildet ist, einen Betrieb des Führungshandgriffes ausschließlich entweder an dem ersten Anschlussmittel oder an dem zweiten Anschlussmittel zuzulassen.

Die erste mechanische Kupplungsvorrichtung oder die mehreren ersten mechanischen Kupplungsvorrichtungen der ersten Anschlussmittel oder die zweite mechanische Kupplungsvorrichtung oder die mehreren zweiten mechanischen Kupplungsvorrichtungen der zweiten Anschlussmittel sind dabei identische Arten von Kupplungsvorrichtungen. Der Führungshandgriff weist eine entsprechend zum Ineinanderstecken passende Gegenkupplungsvorrichtung auf.

Die mechanische Sicherheitseinrichtung kann somit ausgebildet sein, in einem Zustand, in dem der Führungshandgriff an dem ersten Anschlussmittel angeschlossen ist, das wenigstens eine zweite Anschlussmittel mechanisch zu sperren, so dass dort kein weiterer Führungshandgriff angekoppelt werden kann.

Die mechanische Sicherheitseinrichtung kann, im Falle von mehreren ersten Anschlussmitteln an dem ersten Anschlussflansch, auch derart ausgebildet sein, in einem Zustand, in dem der Führungshandgriff an einem der mehreren ersten Anschlussmittel angeschlossen ist, die weiteren ersten Anschlussmittel mechanisch zu sperren, so dass an diesen weiteren ersten Anschlussmittel kein weiterer Führungshandgriff angekoppelt werden kann.

Die mechanische Sicherheitseinrichtung kann analog, im Falle von mehreren zweiten Anschlussmitteln an dem zweiten Anschlussflansch, auch derart ausgebildet sein, in einem Zustand, in dem der Führungshandgriff an einem der mehreren zweiten Anschlussmittel angeschlossen ist, die weiteren zweiten Anschlussmittel mechanisch zu sperren, so dass an diesen weiteren ersten Anschlussmittel kein weiterer Führungshandgriff angekoppelt werden kann.

Das erste Anschlussmittel und das zweite Anschlussmittel können jeweils ein elektrisches Kontaktmittel aufweisen, die ausgebildet sind zum elektrischen Verbinden eines Zustimmschalters, eines Bestätigungsschalters und/oder eines Notaus-Schalters des Führungshandgriffes in einem mechanisch an den jeweiligen ersten Anschlussflansch oder zweiten Anschlussflansch angekoppelten Zustand des Führungshandgriffes mit einer elektrischen Steuervorrichtung.

Insoweit kann der Führungshandgriff einen Zustimmschalter, einen Bestätigungsschalter und/oder einen Notaus-Schalter aufweisen. Das elektrische Kontaktmittel kann beispielsweise ein elektrischer Stecker, eine elektrische Buchse oder eine elektrische Kupplung sein. Der Führungshandgriff weist ein entsprechend zum Ineinanderstecken passendes elektrisches Gegenanschlussmittel, bzw. elektrisches Gegenkontaktmittel auf. Die elektrischen Kontaktmittel des ersten Anschlussmittels oder der mehreren ersten Anschlussmittel und die elektrischen Kontaktmittel des zweiten Anschlussmittels oder der mehreren zweiten Anschlussmittel sind dabei identische Arten von Kontaktmitteln.

Das Roboter-Handführgerät kann eine Sicherheitssteuereinrichtung aufweisen, die ausgebildet ist, über das jeweilige elektrische Kontaktmittel des ersten Anschlussmittels und des zweiten Anschlussmittels einen Betrieb des Führungshandgriffes ausschließlich entweder in einem an dem ersten Anschlussmittel mechanisch angekoppelten Zustand zuzulassen oder in einem an dem zweiten Anschlussmittel mechanisch angekoppelten Zustand zuzulassen.

Auf diese Weise kann statt einer mechanischen Vorrichtung auf einer elektronischen Weise eine Sicherheitseinrichtung geschaffen werden, die verhindert, dass zwei Führungshandgriffe gleichzeitig an zwei verschiedenen Stellen funktionsfähig an das Roboter-Handführgerät angekoppelt werden könnten. Die Sicherheitssteuereinrichtung kann auch eingerichtet sein, in Abhängigkeit der Orientierung des Führungshandgriffes relativ zum Roboter-Handführgerät, d.h. je nach Anbringungsort des Führungshandgriffes an einem der Anschlussmittel, die Sensoreinrichtungen des Roboter-Handführgeräts demgemäß einzurichten, d.h. zu kalibrieren.

Die elektrische Steuervorrichtung, die Sicherheitssteuereinrichtung und/oder eine Auswerteelektronik können für die Sensoreinrichtung in dem Führungshandgriff und/oder in dem Roboter-Handführgerät untergebracht sein. Die Auswerteelektronik kann beispielsweise ausgebildet sein, aus den Signalen der Sensoreinrichtungen, die beispielsweise im Falle von DMS einer elektrischen Widerstandsänderung entsprechende Spannungs- und/oder Stromänderungen sein können, zu den Kräften und/oder Momenten korrelierende Signale zu erzeugen und der Robotersteuerung bereitzustellen.

Das Roboter-Handführgerät kann eine erste umlaufende Außenmantelwand aufweisen, die mit dem ersten Anschlussflansch verbunden ist und die mehrere über die umlaufende Außenmantelwand verteilt angeordnete erste Anschlussmittel aufweist.

Das Roboter-Handführgerät kann eine zweite umlaufende Außenmantelwand aufweisen, die mit dem zweiten Anschlussflansch verbunden ist und die mehrere über die umlaufende Außenmantelwand verteilt angeordnete zweite Anschlussmittel aufweist.

Der erste Anschlussflansch kann eine erste elektrische Kontaktegruppe aufweisen, die ausgebildet ist, in einem an dem Werkzeugflansch des Roboterarms mechanisch angekoppelten Zustand des Roboter-Handführgeräts mit einer ersten Gegenkontaktegruppe am Werkzeugflansch des Roboterarms sich elektrisch zu kontaktieren, um den Zustimmschalter, den Bestätigungsschalter, den Notaus-Schalter des Führungshandgriffes und/oder die Sensoreinrichtung elektrisch mit dem Roboterarm zu verbinden.

Der zweite Anschlussflansch kann eine zweite elektrische Kontaktegruppe aufweisen, die ausgebildet ist, in einem an den zweiten Anschlussflansch mechanisch angekoppelten Zustand eines Werkzeugs mit einer zweiten Gegenkontaktegruppe des Werkzeugs sich elektrisch zu kontaktieren, um das Werkzeug elektrisch mit dem Roboter-Handführgerät und/oder mit dem Roboterarm zu verbinden.

Das Roboter-Handführgerät kann ein zumindest im Wesentlichen zylindrisches Gehäuse mit einer zumindest im Wesentlichen kreiszylindrischen Mantelwand aufweisen, wobei eine kreisförmige Stirnseite des Gehäuses durch den ersten Anschlussflansch gebildet wird und die gegenüberliegende andere kreisförmige Stirnseite des Gehäuses durch den zweiten Anschlussflansch gebildet wird.

Im Inneren des Gehäuses können elektrische, hydraulische und/oder pneumatische Leitungen hindurchgeführt sein. Im Inneren des Gehäuses können elektronische Platinen, elektronische Bauteile und/oder elektrische Kontaktpins angeordnet sein. Die elektrischen, hydraulischen und/oder pneumatischen Leitungen können dazu dienen, Prozessmittel aus dem Inneren des Roboterarms durch das Innere des Roboter-Handführgeräts hindurch an das Werkzeug hinzuführen. Somit können außerhalb des Roboter-Handführgeräts andernfalls erforderliche Leitungen entfallen. Das Gehäuse kann aus Kunststoff oder aus Metall hergestellt sein.

Das Roboter-Handführgerät kann eine Steuervorrichtung aufweisend, die eingerichtet ist, in einem an das erste Anschlussmittel des ersten Anschlussflansches angeschlossenen Zustand des Führungshandgriffes Sensorsignale der Sensoreinrichtung auszuwerten, derart, dass auf Grundlage der Sensorsignale der Sensoreinrichtung Prozesskräfte und/oder Prozessmomente erfasst werden, wenn durch Bewegen des Führungshandgriffes das mit seinem ersten Anschlussflansch an einem Werkzeugflansch eines Roboterarms angeschlossene Roboter-Handführgerät zusammen mit dem Roboterarm bewegt wird und dadurch ein an dem zweiten Anschlussflansch des Roboter-Handführgeräts angeschlossenes Werkzeug gehandhabt wird.

Das Roboter-Handführgerät kann eine Steuervorrichtung aufweisen, die eingerichtet ist, in einem an das zweiten Anschlussmittel des zweiten Anschlussflansches angeschlossenen Zustand des Führungshandgriffes Sensorsignale der Sensoreinrichtung auszuwerten, derart, dass auf Grundlage der Sensorsignale der Sensoreinrichtung ein Roboterarm in einem Handführbetrieb in seinem Gelenkbewegungen gesteuert wird, wenn durch Bewegen des Führungshandgriffes das mit seinem ersten Anschlussflansch an einem Werkzeugflansch des Roboterarms angeschlossene Roboter-Handführgerät zusammen mit dem Roboterarm bewegt wird.

Das Roboter-Handführgerät kann zusätzlich zu dem ersten Anschlussflansch und dem zweiten Anschlussflansch einen dritten Anschlussflansch aufweisen, wobei die zwischen dem ersten Anschlussflansch und dem zweiten Anschlussflansch angeordnete Übertragungsvorrichtung eine erste Übertragungsvorrichtung bildet, an der eine erste Sensoreinrichtung angebracht ist, die ausgebildet ist, die über die erste Übertragungsvorrichtung übertragenen Kräfte und Momente zu erfassen, und zwischen dem ersten Anschlussflansch und dem dritten Anschlussflansch eine zweite Übertragungsvorrichtung angeordnet ist, an der eine zweite Sensoreinrichtung angebracht ist, die ausgebildet ist, die über die zweite Übertragungsvorrichtung übertragenen Kräfte und Momente zu erfassen.

Das Roboter-Handführgerät kann eine Steuervorrichtung aufweisen, die eingerichtet ist, in einem an das erste Anschlussmittel des ersten Anschlussflansches angeschlossenen Zustand des Führungshandgriffes Sensorsignale der zweiten Sensoreinrichtung auszuwerten, derart, dass auf Grundlage der Sensorsignale der zweiten Sensoreinrichtung ein Roboterarm in einem Handführbetrieb in seinem Gelenkbewegungen gesteuert wird, und eingerichtet ist, in dem an das erste Anschlussmittel des ersten Anschlussflansches angeschlossenen Zustand des Führungshandgriffes Sensorsignale der ersten Sensoreinrichtung auszuwerten, derart, dass auf Grundlage der Sensorsignale der ersten Sensoreinrichtung Prozesskräfte und/oder Prozessmomente erfasst werden, wenn durch Bewegen des Führungshandgriffes das mit seinem dritten Anschlussflansch an einem Werkzeugflansch des Roboterarms angeschlossene Roboter-Handführgerät zusammen mit dem Roboterarm bewegt wird und dadurch ein an dem zweiten Anschlussflansch des Roboter-Handführgeräts angeschlossenes Werkzeug gehandhabt wird.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine perspektivische Ansicht eines Industrieroboters, der einen Roboterarm, eine Robotersteuerung, sowie ein Werkzeug und ein erfindungsgemäßes Roboter-Handführgerät aufweist,
- Fig. 2: eine schematische Darstellung einer repräsentativen Ausführungsform eines erfindungsgemäßen Roboter-Handführgeräts bei entferntem Gehäuse,
- Fig. 3: eine schematische Darstellung eines nicht erfindungsgemäßen Beispiels eines Roboter-Handführgeräts bei entferntem Gehäuse,
- Fig. 4: eine perspektivische Darstellung eines Handbereiches eines Roboterarms mit einem Werkzeugflansch, an dem beispielhaft das Roboter-Handführgerät gemäß Fig. 3 befestigt ist,
- Fig. 5: eine perspektivische Darstellung eines beispielhaften Führungshandgriffes, das an dem Roboter-Handführgerät gemäß Fig. 4 lösbar befestigt werden kann, und
- Fig. 6: eine Teilschnittdarstellung eines repräsentativen anderen Beispiels eines erfindungsgemäßen Roboter-Handführgerät mit elektrischen Kontaktgruppen.

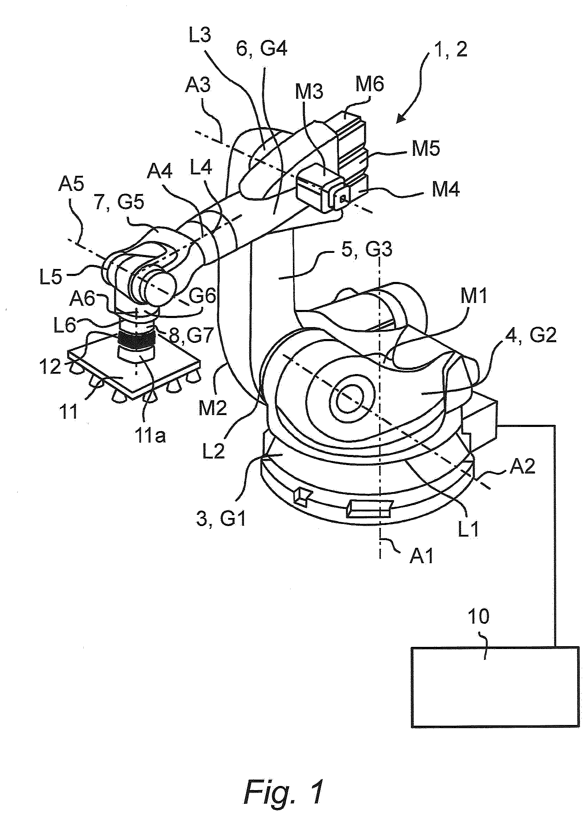

Die Fig. 1 zeigt einen Industrieroboter 1, der einen Roboterarm 2 und eine Robotersteuerung 10 aufweist. Der Roboterarm 2 umfasst im Falle des vorliegenden Ausführungsbeispiels mehrere, nacheinander angeordnete, und mittels Gelenke L1 bis L6 drehbar miteinander verbundene Glieder G1 bis G7.

Der Industrieroboter 1 weist die Robotersteuerung 10 auf, die ausgebildet ist, ein Roboterprogramm auszuführen, sowie den Roboterarm 2 mit mehreren Gliedern G1-G7 auf, die über Gelenke L1-L6 verbunden sind, die zum automatischen gegeneinander Verstellen der Glieder G1-G7 gemäß dem Roboterprogramm ausgebildet sind, wobei eines der mehreren Glieder G1-G7 ein Endglied (G7) des Roboterarms 2 bildet, das einen Werkzeugflansch 8 mit Roboterflansch-Gewindebohrungen 8.1 bis 8.7 und einer Roboterflansch-Passungsbohrung 8.8, insbesondere eines ersten Bohrbildes, aufweist.

Die Robotersteuerung 10 des Industrieroboters 1 ist ausgebildet bzw. eingerichtet, ein Roboterprogramm auszuführen, durch welches die Gelenke L1 bis L6 des Roboterarms 2 gemäß des Roboterprogramms automatisiert oder in einem Handfahrbetrieb automatisch verstellt bzw. drehbewegt werden können. Dazu ist die Robotersteuerung 10 mit ansteuerbaren elektrischen Antrieben M1 bis M6 verbunden, die ausgebildet sind, die Gelenke L1 bis L6 des Industrieroboters 1 zu verstellen.

Bei den Gliedern G1 bis G7 handelt es sich im Falle des vorliegenden Ausführungsbeispiels um ein Gestell 3 und ein relativ zum Gestell 3 um eine vertikal verlaufende Achse A1 drehbar gelagertes Karussell 4. Weitere Glieder des Roboterarms 2 sind eine Schwinge 5, ein Armausleger 6 und eine vorzugsweise mehrachsige Roboterhand 7 mit einer als Werkzeugflansch 8 ausgeführten Befestigungsvorrichtung zum Befestigen eines Werkzeugs 11 bzw. einer erfindungsgemäßen Kraft-/Momenten-Sensorvorrichtung 12. Die Schwinge 5 ist am unteren Ende, d.h. an dem Gelenk L2 der Schwinge 5, das auch als Schwingenlagerkopf bezeichnet werden kann, auf dem Karussell 4 um eine vorzugsweise horizontale Drehachse A2 schwenkbar gelagert. Das Werkzeug 11 ist im Falle des dargestellten Ausführungsbeispiels repräsentativ für jegliches andersartiges Roboterwerkzeug als ein Sauggreifer ausgebildet. Das Werkzeug 11 bzw. der Sauggreifer weist einen Befestigungsflansch 11a auf.

Am oberen Ende der Schwinge 5 ist an dem ersten Gelenk L3 der Schwinge 5 wiederum um eine ebenfalls vorzugsweise horizontale Achse A3 der Armausleger 6 schwenkbar gelagert. Dieser trägt endseitig die Roboterhand 7 mit ihren vorzugsweise drei Drehachsen A4, A5, A6. Die Gelenke L1 bis L6 sind durch jeweils einen der elektrischen Antriebe M1 bis M6 über die Robotersteuerung 10 programmgesteuert antreibbar.

Der Roboterarm 2 weist ein wie im Folgenden beschriebenes Roboter-Handführgerät 12 auf, das mittels Befestigungsschrauben über einen ersten Anschlussflansch 14.1 der Roboter-Handführgerät 12 an dem Werkzeugflansch 8 des Roboterarms 2 festgeschraubt ist.

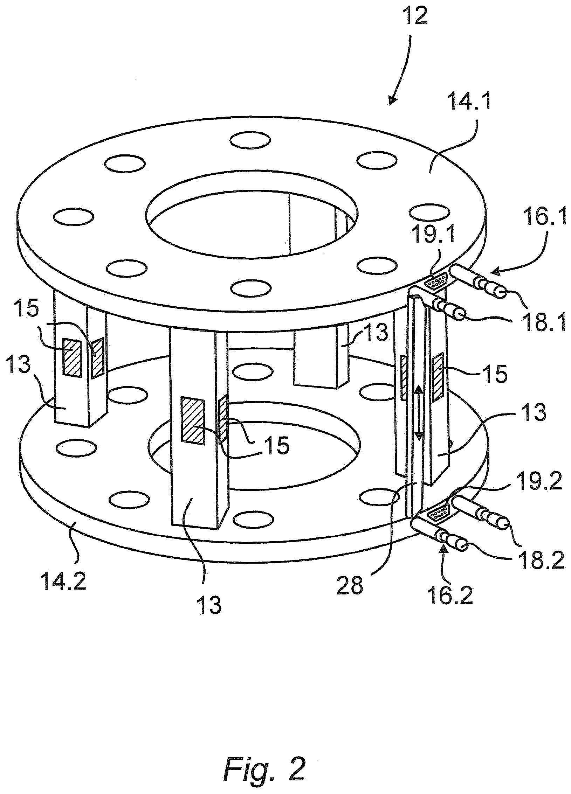

In Fig. 2 ist das Roboter-Handführgerät 12 in seiner grundlegenden Ausführungsart schematisch dargestellt.

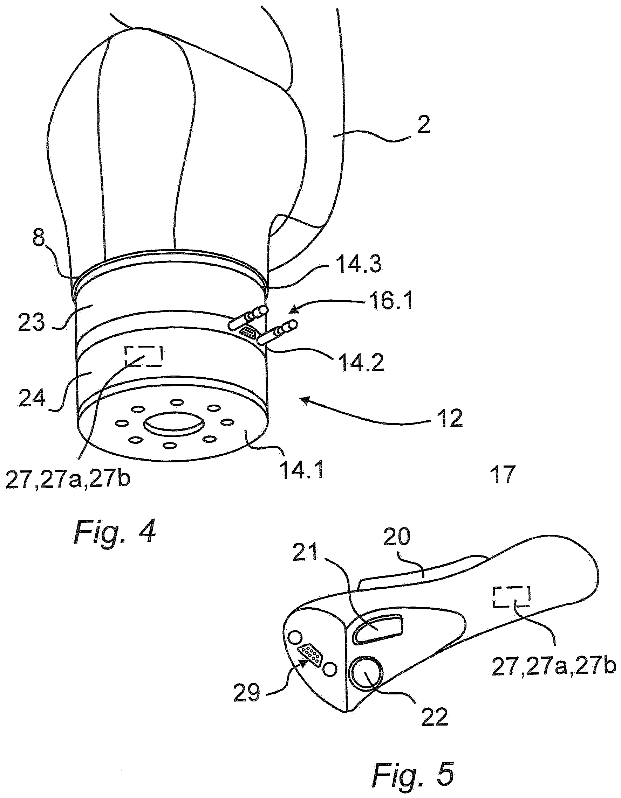

Das Roboter-Handführgerät 12 weist einen ersten Anschlussflansch 14.1 auf, der zum Verbinden des Roboter-Handführgeräts 12 mit dem Werkzeugflansch 8 des Roboterarms 2 ausgebildet ist. Das Roboter-Handführgerät 12 weist außerdem einen zweiten Anschlussflansch 14.2 auf, der ausgebildet ist zur Befestigung eines vom Roboterarm 2 handzuhabenden Werkzeugs 11 an dem Roboter-Handführgerät 12, sowie eine Übertragungsvorrichtung 13, die ausgebildet ist, Kräfte und Momente zwischen dem ersten Anschlussflansch 14.1 und dem zweiten Anschlussflansch 14.2 zu übertragen und eine an der Übertragungsvorrichtung 13 angebrachte Sensoreinrichtung 15, die ausgebildet ist, die über die Übertragungsvorrichtung 13 übertragenen Kräfte und Momente zu erfassen, wobei das Roboter-Handführgerät 12 wenigstens ein erstes Anschlussmittel 16.1 aufweist, das mit dem ersten Anschlussflansch 14.1 verbunden ist, und das wenigstens eine erste Anschlussmittel 16.1 ausgebildet ist zum lösbaren Anschließen eines Führungshandgriffes 17 (Fig. 5) des Roboter-Handführgerätes 12 an den ersten Anschlussflansch 14.1. Dazu weist das Roboter-Handführgerätes 12 ein Gegenanschlussmittel 29 auf, das in einem mit dem erstes Anschlussmittel 16.1 oder zweiten Anschlussmittel 16.2 verbundenen Zustand sowohl mechanisch als auch elektrisch zusammenwirkt.

Das Roboter-Handführgerät 12 weist zusätzlich zu dem wenigstens einen ersten Anschlussmittel 16.1 wenigstens ein zweites Anschlussmittel 16.2 auf, das mit dem zweiten Anschlussflansch 14.2 verbunden ist, wobei das wenigstens eine erste Anschlussmittel 16.1 und das wenigstens eine zweite Anschlussmittel 16.2 ausgebildet sind zum wahlweisen lösbaren Anschließen des Führungshandgriffes 17 (Fig. 5) des Roboter-Handführgerätes an den ersten Anschlussflansch 14.1 oder den zweiten Anschlussflansch 14.2.

Das erste Anschlussmittel 16.1 und das zweite Anschlussmittel 16.2 weisen jeweils eine mechanische Kupplungsvorrichtung 18.1, 18.2 auf, die ausgebildet sind zum kraftschlüssigen und/oder formschlüssigen mechanischen Verbinden des Führungshandgriffes 17 (Fig. 5) wahlweise mit dem jeweiligen ersten Anschlussflansch 14.1 oder zweiten Anschlussflansch 14.2.

Die jeweilige mechanische Kupplungsvorrichtung 18.1, 18.2 des ersten Anschlussmittels 16.1 und des zweiten Anschlussmittels 16.2 können eine mechanische Sicherheitseinrichtung 28 (Fig. 2) aufweisen, die ausgebildet ist, einen Betrieb des Führungshandgriffes 17 (Fig. 5) ausschließlich entweder an dem ersten Anschlussmittel 16.1 oder an dem zweiten Anschlussmittel 16.2 zuzulassen.

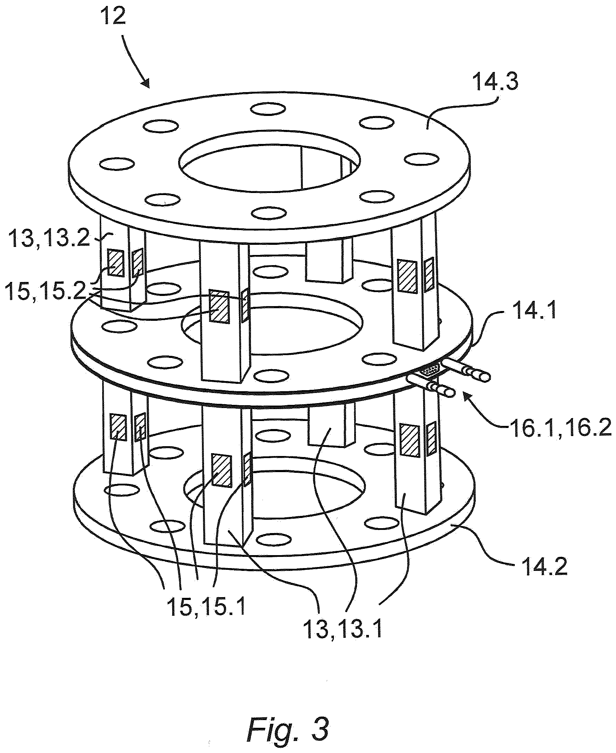

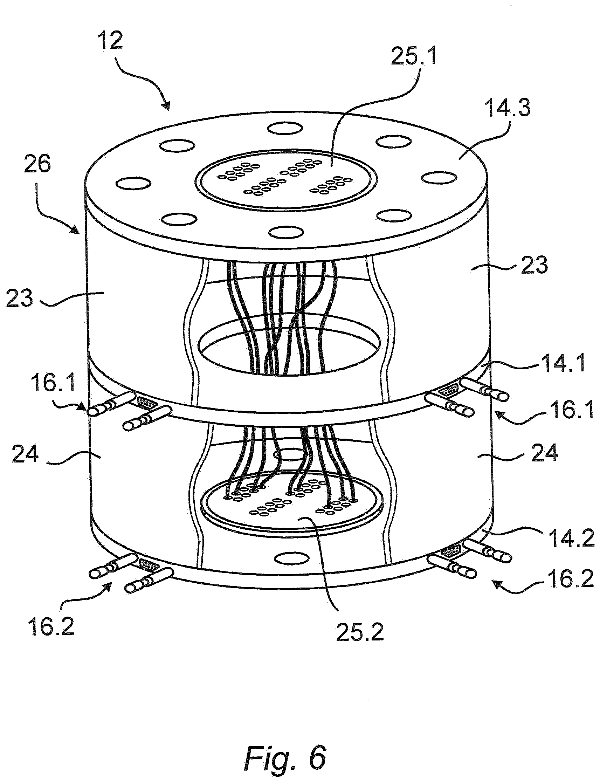

In den Ausführungsformen gemäß Fig. 2 und Fig. 6 und den Beispielen gemäß Fig.3 und Fig.4 weisen das erste Anschlussmittel 16.1 und das zweite Anschlussmittel 16.2 jeweils auch ein elektrisches Kontaktmittel 19.1, 19.2 auf, die ausgebildet sind zum elektrischen Verbinden eines Zustimmschalters 20, eines Bestätigungsschalters 21 und/oder eines Notaus-Schalters 22 des Führungshandgriffes 17, wie in Fig. 5 aufgezeigt, in einem mechanisch an den jeweiligen ersten Anschlussflansch 14.1 oder zweiten Anschlussflansch 14.2 angekoppelten Zustand des Führungshandgriffes 17 mit einer elektrischen Steuervorrichtung 27.

Das Roboter-Handführgerät 12 kann eine Sicherheitssteuereinrichtung 27a aufweisen, die ausgebildet ist, über das jeweilige elektrische Kontaktmittel 19.1, 19.2 des ersten Anschlussmittels 16.1 und des zweiten Anschlussmittels 16.2 einen Betrieb des Führungshandgriffes 17 ausschließlich entweder in einem an dem ersten Anschlussmittel 16.1 mechanisch angekoppelten Zustand zuzulassen oder in einem an dem zweiten Anschlussmittel 16.2 mechanisch angekoppelten Zustand zuzulassen.

Die elektrische Steuervorrichtung 27, die Sicherheitssteuereinrichtung 27a und/oder eine Auswerteelektronik 27b für die Sensoreinrichtung 15 kann in dem Führungshandgriffes 17 und/oder in dem Roboter-Handführgerät 12 untergebracht sein. Das Roboter-Handführgerät 12 weist, wie insbesondere in Fig. 4 und Fig. 6 dargestellt ist, eine erste umlaufende Außenmantelwand 23 auf, die mit dem ersten Anschlussflansch 14.1 verbunden ist und die mehrere über die umlaufende Außenmantelwand 23 verteilt angeordnete erste Anschlussmittel 16.1 aufweist.

Das Roboter-Handführgerät 12 im Beispiel gemäß Fig.4 und in der Ausführungsvariante gemäß Fig. 6 weist außerdem eine zweite umlaufende Außenmantelwand 24 auf, die mit dem zweiten Anschlussflansch 14.2 verbunden ist und die mehrere über die umlaufende Außenmantelwand 24 verteilt angeordnete zweite Anschlussmittel 16.2 aufweist.

In dem in Fig.4 gezeigten Beispiel und der in Fig. 6 gezeigten Ausführungsvariante weist das Roboter-Handführgerät 12 zusätzlich zu dem ersten Anschlussflansch 14.1 und dem zweiten Anschlussflansch 14.2 einen dritten Anschlussflansch 14.3 auf, wobei die zwischen dem ersten Anschlussflansch 14.1 und dem zweiten Anschlussflansch 14.2 angeordnete Übertragungsvorrichtung 13 eine erste Übertragungsvorrichtung 13.1 bildet, an der eine erste Sensoreinrichtung 15.1 angebracht ist, die ausgebildet ist, die über die erste Übertragungsvorrichtung 13.1 übertragenen Kräfte und Momente zu erfassen, und zwischen dem ersten Anschlussflansch 14.1 und dem dritten Anschlussflansch 14.3 eine zweite Übertragungsvorrichtung 13.2 angeordnet ist, an der eine zweite Sensoreinrichtung 15.2 angebracht ist, die ausgebildet ist, die über die zweite Übertragungsvorrichtung 13.2 übertragenen Kräfte und Momente zu erfassen.

Der erste Anschlussflansch 14.1 oder, wie in Fig. 6 dargestellt, der dritte Anschlussflansch 14.3 weist eine erste elektrische Kontaktegruppe 25.1 auf, die ausgebildet ist, in einem an dem Werkzeugflansch 8 des Roboterarms 2 mechanisch angekoppelten Zustand des Roboter-Handführgeräts 12 mit einer ersten Gegenkontaktegruppe am Werkzeugflansch 8 des Roboterarms 2 sich elektrisch zu kontaktieren, um den Zustimmschalter 20, den Bestätigungsschalter 21, den Notaus-Schalter 22 des Führungshandgriffes 17 und/oder die erste Sensoreinrichtung 15.1 und/oder die zweite Sensoreinrichtung 15.2 elektrisch mit dem Roboterarm 2 bzw. dessen Robotersteuerung 10 zu verbinden.

Der zweite Anschlussflansch 14.2 kann demgemäß die zweite elektrische Kontaktegruppe 25.2 aufweisen, die ausgebildet ist, in einem an den zweiten Anschlussflansch 14.2 mechanisch angekoppelten Zustand eines Werkzeugs 11 mit einer zweiten Gegenkontaktegruppe des Werkzeugs 11 sich elektrisch zu kontaktieren, um das Werkzeug 11 elektrisch mit dem Roboter-Handführgerät 17 und/oder mit dem Roboterarm 2 bzw. dessen Robotersteuerung 10 zu verbinden.

Das Roboter-Handführgerät 12 weist im Falle der vorliegenden Ausführungsbeispiele ein zumindest im Wesentlichen zylindrisches Gehäuse 26 (Fig. 6) mit einer zumindest im Wesentlichen kreiszylindrischen Mantelwand auf, wobei eine kreisförmige Stirnseite des Gehäuses 26 durch den ersten Anschlussflansch 14.1 gebildet wird und die gegenüberliegende andere kreisförmige Stirnseite des Gehäuses 26 durch den zweiten Anschlussflansch 14.2 gebildet wird.

Das Roboter-Handführgerät 12, wie in Fig. 2 aufgezeigt, kann eine Steuervorrichtung 27 aufweisen, die eingerichtet ist, in einem an das erste Anschlussmittel 16.1 des ersten Anschlussflansches 14.1 angeschlossenen Zustand des Führungshandgriffes 17 Sensorsignale der Sensoreinrichtung 15, 15.1 auszuwerten, derart, dass auf Grundlage der Sensorsignale der Sensoreinrichtung 15, 15.1 Prozesskräfte und/oder Prozessmomente erfasst werden, wenn durch Bewegen des Führungshandgriffes 17 das mit seinem ersten Anschlussflansch 14.1 an einem Werkzeugflansch 8 eines Roboterarms 2 angeschlossene Roboter-Handführgerät 12 zusammen mit dem Roboterarm 2 bewegt wird und dadurch ein an dem zweiten Anschlussflansch 14.2 des Roboter-Handführgeräts 12 angeschlossenes Werkzeug 11 gehandhabt wird.

Das Roboter-Handführgerät 12, wie in Fig. 2 aufgezeigt, kann eine Steuervorrichtung 27 aufweisen, die eingerichtet ist, in einem an das zweiten Anschlussmittel 16.2 des zweiten Anschlussflansches 14.2 angeschlossenen Zustand des Führungshandgriffes 17 Sensorsignale der Sensoreinrichtung 15, 15.1 auszuwerten, derart, dass auf Grundlage der Sensorsignale der Sensoreinrichtung 15, 15.2 ein Roboterarm 2 in einem Handführbetrieb in seinem Gelenkbewegungen gesteuert wird, wenn durch Bewegen des Führungshandgriffes 17 das mit seinem ersten Anschlussflansch 14.1 an einem Werkzeugflansch 8 des Roboterarms 2 angeschlossene Roboter-Handführgerät 17 zusammen mit dem Roboterarm 2 bewegt wird.

Das Roboter-Handführgerät 12, wie in Fig. 3 und Fig. 6 aufgezeigt, kann eine Steuervorrichtung 27 aufweisen, die eingerichtet ist, in einem an das erste Anschlussmittel 16.1 des ersten Anschlussflansches 14.1 angeschlossenen Zustand des Führungshandgriffes 17 Sensorsignale der zweiten Sensoreinrichtung 15.2 auszuwerten, derart, dass auf Grundlage der Sensorsignale der zweiten Sensoreinrichtung 15.2 ein Roboterarm 1 in einem Handführbetrieb in seinem Gelenkbewegungen gesteuert wird, und eingerichtet ist, in dem an das erste Anschlussmittel 16.2 des ersten Anschlussflansches 14.1 angeschlossenen Zustand des Führungshandgriffes 17 Sensorsignale der ersten Sensoreinrichtung 15.1 auszuwerten, derart, dass auf Grundlage der Sensorsignale der ersten Sensoreinrichtung 15.1 Prozesskräfte und/oder Prozessmomente erfasst werden, wenn durch Bewegen des Führungshandgriffes 17 das mit seinem dritten Anschlussflansch 14.2 an einem Werkzeugflansch 8 des Roboterarms 2 angeschlossene Roboter-Handführgerät 17 zusammen mit dem Roboterarm 2 bewegt wird und dadurch ein an dem zweiten Anschlussflansch 14.2 des Roboter-Handführgeräts 17 angeschlossenes Werkzeug 11 gehandhabt wird.

## Patentansprüche

1. Roboter-Handführgerät, aufweisend einen ersten Anschlussflansch (14.1), der zum Verbinden des Roboter-Handführgeräts (12) mit einem Werkzeugflansch (8) eines Roboterarms (2) ausgebildet ist, einen zweiten Anschlussflansch (14.2), der ausgebildet ist zur Befestigung eines vom Roboterarm (2) handzuhabenden Werkzeugs (11) an dem Roboter-Handführgerät (12), eine Übertragungsvorrichtung (13), die ausgebildet ist, Kräfte und Momente zwischen dem ersten Anschlussflansch (14.1) und dem zweiten Anschlussflansch (14.2) zu übertragen, eine an der Übertragungsvorrichtung (13) angebrachte Sensoreinrichtung (15), die ausgebildet ist, die über die Übertragungsvorrichtung (13) übertragenen Kräfte und Momente zu erfassen, wenigstens ein erstes Anschlussmittel (16.1), das mit dem ersten Anschlussflansch (14.1) verbunden ist, und wenigstens ein zweites Anschlussmittel (16.2), das mit dem zweiten Anschlussflansch (14.2) verbunden ist, wobei das wenigstens eine erste Anschlussmittel (16.1) und das wenigstens eine zweite Anschlussmittel (16.2) ausgebildet sind zum wahlweisen lösbaren Anschließen des Führungshandgriffes (17) des Roboter-Handführgerätes (12) an den ersten Anschlussflansch (14.1) oder den zweiten Anschlussflansch (14.2).

2. Roboter-Handführgerät nach Anspruch 1, **dadurch gekennzeichnet, dass** das erste Anschlussmittel (16.1) und das zweite Anschlussmittel (16.2) jeweils eine mechanische Kupplungsvorrichtung (18.1, 18.2) aufweisen, die ausgebildet sind zum kraftschlüssigen und/oder formschlüssigen mechanischen Verbinden des Führungshandgriffes (17) wahlweise mit dem jeweiligen ersten Anschlussflansch (14.1) oder dem zweiten Anschlussflansch (14.2).

3. Roboter-Handführgerät nach Anspruch 2, **dadurch gekennzeichnet, dass** die jeweilige mechanische Kupplungsvorrichtung (18.1, 18.2) des ersten Anschlussmittels (16.1) und des zweiten Anschlussmittels (16.2) eine mechanische Sicherheitseinrichtung (28) aufweisen, die ausgebildet ist, einen Betrieb des Führungshandgriffes (17) ausschließlich entweder an dem ersten Anschlussmittel (16.1) oder an dem zweiten Anschlussmittel (16.2) zuzulassen.

4. Roboter-Handführgerät nach einem der Ansprüche 1 bis 3, **dadurch gekennzeichnet, dass** das erste Anschlussmittel (16.1) und das zweite Anschlussmittel (16.2) jeweils ein elektrisches Kontaktmittel (19.1, 19.2) aufweisen, die ausgebildet sind zum elektrischen Verbinden eines Zustimmschalters (20), eines Bestätigungsschalters (21) und/oder eines Notaus-Schalters (22) des Führungshandgriffes (17) in einem mechanisch an den jeweiligen ersten Anschlussflansch oder zweiten Anschlussflansch angekoppelten Zustand des Führungshandgriffes (17) mit einer elektrischen Steuervorrichtung (27, 27a, 27b).

5. Roboter-Handführgerät nach Anspruch 4, **gekennzeichnet durch** eine Sicherheitssteuereinrichtung (27a), die ausgebildet ist, über das jeweilige elektrische Kontaktmittel (19.1, 19.2) des ersten Anschlussmittels (16.1) und des zweiten Anschlussmittels (16.2) einen Betrieb des Führungshandgriffes (17) ausschließlich entweder in einem an dem ersten Anschlussmittel (16.1) mechanisch angekoppelten Zustand zuzulassen oder in einem an dem zweiten Anschlussmittel (16.2) mechanisch angekoppelten Zustand zuzulassen.

6. Roboter-Handführgerät nach Anspruch 4 oder 5, **dadurch gekennzeichnet, dass** die elektrische Steuervorrichtung (27), die Sicherheitssteuereinrichtung (27a) und/oder eine Auswerteelektronik (27b) für die Sensoreinrichtung (15) in dem Führungshandgriffes (17) und/oder in dem Roboter-Handführgerät (12) untergebracht ist.

7. Roboter-Handführgerät nach einem der Ansprüche 1 bis 6, **dadurch gekennzeichnet, dass** das Roboter-Handführgerät (12) eine erste umlaufende Außenmantelwand (23) aufweist, die mit dem ersten Anschlussflansch (14.1) verbunden ist und die mehrere über die umlaufende Außenmantelwand (23) verteilt angeordnete erste Anschlussmittel (16.1) aufweist.

8. Roboter-Handführgerät nach einem der Ansprüche 1 bis 7, **dadurch gekennzeichnet, dass** das Roboter-Handführgerät (12) eine zweite umlaufende Außenmantelwand (24) aufweist, die mit dem zweiten Anschlussflansch (14.2) verbunden ist und die mehrere über die umlaufende Außenmantelwand (24) verteilt angeordnete zweite Anschlussmittel (16.2) aufweist.

9. Roboter-Handführgerät nach einem der Ansprüche 1 bis 8, **dadurch gekennzeichnet, dass** der erste Anschlussflansch (14.1) eine erste elektrische Kontaktegruppe (25.1) aufweist, die ausgebildet ist, in einem an dem Werkzeugflansch (8) des Roboterarms (2) mechanisch angekoppelten Zustand des Roboter-Handführgeräts (12) mit einer ersten Gegenkontaktegruppe am Werkzeugflansch (8) des Roboterarms (2) sich elektrisch zu kontaktieren, um den Zustimmschalter (20), den Bestätigungsschalter (21), den Notaus-Schalter (22) des Führungshandgriffes (17) und/oder die Sensoreinrichtung (15) elektrisch mit dem Roboterarm (2) zu verbinden.

10. Roboter-Handführgerät nach einem der Ansprüche 1 bis 9, **dadurch gekennzeichnet, dass** der zweite Anschlussflansch (14.2) eine zweite elektrische Kontaktegruppe (25.2) aufweist, die ausgebildet ist, in einem an den zweiten Anschlussflansch (14.2) mechanisch angekoppelten Zustand eines Werkzeugs (11) mit einer zweiten Gegenkontaktegruppe des Werkzeugs (11) sich elektrisch zu kontaktieren, um das Werkzeug (11) elektrisch mit dem Roboter-Handführgerät (12) und/oder mit dem Roboterarm (2) zu verbinden.

11. Roboter-Handführgerät nach Anspruch 9 oder 10, **dadurch gekennzeichnet, dass** das Roboter-Handführgerät (12) ein zumindest im Wesentlichen zylindrisches Gehäuse (26) mit einer zumindest im Wesentlichen kreiszylindrischen Mantelwand aufweist, wobei eine kreisförmige Stirnseite des Gehäuses (26) durch den ersten Anschlussflansch (14.1) gebildet wird und die gegenüberliegende andere kreisförmige Stirnseite des Gehäuses (26) durch den zweiten Anschlussflansch (14.2) gebildet wird.

12. Roboter-Handführgerät nach einem der Ansprüche 1 bis 11, aufweisend eine Steuervorrichtung (27), die eingerichtet ist, in einem an das erste Anschlussmittel (16.1) des ersten Anschlussflansches (14.1) angeschlossenen Zustand des Führungshandgriffes (17) Sensorsignale der Sensoreinrichtung (15) auszuwerten, derart, dass auf Grundlage der Sensorsignale der Sensoreinrichtung (15) Prozesskräfte und/oder Prozessmomente erfasst werden, wenn durch Bewegen des Führungshandgriffes (17) das mit seinem ersten Anschlussflansch (14.1) an einem Werkzeugflansch (8) eines Roboterarms (2) angeschlossene Roboter-Handführgerät (12) zusammen mit dem Roboterarm (2) bewegt wird und dadurch ein an dem zweiten Anschlussflansch (14.2) des Roboter-Handführgeräts (12) angeschlossenes Werkzeug (11) gehandhabt wird.

13. Roboter-Handführgerät nach einem der Ansprüche 1 bis 11, aufweisend eine Steuervorrichtung (27), die eingerichtet ist, in einem an das zweiten Anschlussmittel (16.2) des zweiten Anschlussflansches (14.2) angeschlossenen Zustand des Führungshandgriffes (17) Sensorsignale der Sensoreinrichtung (15) auszuwerten, derart, dass auf Grundlage der Sensorsignale der Sensoreinrichtung (15) ein Roboterarm (2) in einem Handführbetrieb in seinem Gelenkbewegungen gesteuert wird, wenn durch Bewegen des Führungshandgriffes (17) das mit seinem ersten Anschlussflansch (14.1) an einem Werkzeugflansch (8) des Roboterarms (2) angeschlossene Roboter-Handführgerät (12) zusammen mit dem Roboterarm (2) bewegt wird.

14. Roboter-Handführgerät nach einem der Ansprüche 1 bis 13, **dadurch gekennzeichnet, dass** das Roboter-Handführgerät (12) zusätzlich zu dem ersten Anschlussflansch (14.1) und dem zweiten Anschlussflansch (14.2) einen dritten Anschlussflansch (14.3) aufweist, wobei die zwischen dem ersten Anschlussflansch (14.1) und dem zweiten Anschlussflansch (14.2) angeordnete Übertragungsvorrichtung (13) eine erste Übertragungsvorrichtung (13.1) bildet, an der eine erste Sensoreinrichtung (15.1) angebracht ist, die ausgebildet ist, die über die erste Übertragungsvorrichtung (13.1) übertragenen Kräfte und Momente zu erfassen, und zwischen dem ersten Anschlussflansch (14.1) und dem dritten Anschlussflansch (14.3) eine zweite Übertragungsvorrichtung (13.2) angeordnet ist, an der eine zweite Sensoreinrichtung (15.2) angebracht ist, die ausgebildet ist, die über die zweite Übertragungsvorrichtung (13.2) übertragenen Kräfte und Momente zu erfassen.

15. Roboter-Handführgerät nach Anspruch 14, aufweisend eine Steuervorrichtung (27), die eingerichtet ist, in einem an das erste Anschlussmittel (16.1) des ersten Anschlussflansches (14.1) angeschlossenen Zustand des Führungshandgriffes (17) Sensorsignale der zweiten Sensoreinrichtung (15.2) auszuwerten, derart, dass auf Grundlage der Sensorsignale der zweiten Sensoreinrichtung (15.2) ein Roboterarm (2) in einem Handführbetrieb in seinem Gelenkbewegungen gesteuert wird, und eingerichtet ist, in dem an das erste Anschlussmittel (16.1) des ersten Anschlussflansches (14.1) angeschlossenen Zustand des Führungshandgriffes (17) Sensorsignale der ersten Sensoreinrichtung (15.1) auszuwerten, derart, dass auf Grundlage der Sensorsignale der ersten Sensoreinrichtung (15.1) Prozesskräfte und/oder Prozessmomente erfasst werden, wenn durch Bewegen des Führungshandgriffes (17) das mit seinem dritten Anschlussflansch (14.3) an einem Werkzeugflansch (8) des Roboterarms (2) angeschlossene Roboter-Handführgerät (12) zusammen mit dem Roboterarm (2) bewegt wird und dadurch ein an dem zweiten Anschlussflansch (14.2) des Roboter-Handführgeräts (12) angeschlossenes Werkzeug (11) gehandhabt wird.

## Claims

1. A robotic hand-held device comprising a first connection flange (14.1) which is designed for connecting the robotic hand-held device (12) to a tool flange (8) of a robotic arm (2), a second connection flange (14.2) which is designed for attaching a tool (11) to be handled by the robotic arm (2) to the robotic hand-held device (12), and a transmission device (13) which is designed to transmit forces and torques between the first connection flange (14.1) and the second connection flange (14.2) and a sensor device (15) attached to the transmission device (13), which is designed to detect the forces and torques transmitted via the transmission device (13), **is characterized in that** the robot hand-held device (12) has at least one first connecting device (16.1) which is connected to the first connection flange (14.1) and that at least one first connecting device (16.1) is formed for the detachable connection of a guide handle (17) of the robot hand-held device (12) to the first connection flange (14.1) and wherein the robotic hand-held device (12) has, in addition to at least one first connecting device (16.1), at least one second connecting device (16.2) which is connected to the second connection flange (14.2), and at least one first connecting device (16.1) and at least one second connecting device (16.2) are designed for optional detachable Connecting the guide handle (17) of the robot hand-held device (12) to the first connection flange (14.1) or the second connection flange (14.2).

2. A robot hand-held guide device according to claim 1, **characterized in that** the first connecting device (16.1) and the second connecting device (16.2) each have a mechanical coupling device (18.1, 18.2) which are designed for the force-fit and/or form-fitting mechanical connection of the guide handle (17) either with the respective first connection flange (14.1) or the second connection flange (14.2).

3. A robotic hand-held device according to claim 2, **characterized in that** the respective mechanical coupling device (18.1, 18.2) of the first connecting device (16.1) and the second connecting device (16.2) have a mechanical safety device (28) which is designed to allow operation of the guide handle (17) exclusively on either the first connecting device (16.1) or the second connecting device (16.2).

4. A robotic hand-held device according to any one of claims 1 to 3, **characterized in that** the first connecting means (16.1) and the second connecting means (16.2) each have an electrical contact means (19.1, 19.2) which are designed for electrically connecting an enabling switch (20), a confirmation switch (21) and/or an emergency stop switch (22) of the guide handle (17) in a connection connected mechanically to the respective first connection flange or second connection flange coupled state of the guide handle (17) with an electrical control device (27, 27a, 27b).

5. A robotic hand-held device according to claim 4, **characterized by** a safety control device (27a) which is designed to allow operation of the guide handle (17) via the respective electrical contact means (19.1, 19.2) of the first connection (16.1) and the second connection (16.2) exclusively either in a mechanically coupled state to the first connection (16.1) or in a state mechanically coupled to the second connection (16.2) coupled state.

6. A robotic hand-held device according to claim 4 or 5, **characterized in that** the electrical control device (27), the safety control device (27a) and/or an evaluation electronics (27b) for the sensor device (15) is housed in the guide handle (17) and/or in the robot hand-held device (12).

7. A robot hand-held device according to any one of claims 1 to 6, **characterized in that** the robotic hand-held device (12) has a first circumferential outer jacket wall (23) which is connected to the first connection flange (14.1) and which has several first connecting means (16.1) distributed over the circumferential outer jacket wall (23).

8. A robot hand-held device according to any one of claims 1 to 7, **characterized in that** the robotic hand-held device (12) has a second circumferential outer jacket wall (24) which is connected to the second connection flange (14.2) and which has several second connecting means (16.2) distributed over the circumferential outer jacket wall (24).

9. A robotic hand-held device according to any one of claims 1 to 8, **characterized in that** the first connection flange (14.1) has a first electrical contact group (25.1) which is designed to contact electrically in a mechanically coupled state of the robot hand-held device (12) to a first counter-contact group on the tool flange (8) of the robot arm (2) in order to contact the enabling switch (20), electrically connect the confirmation switch (21), the emergency stop switch (22) of the guide handle (17) and/or the sensor device (15) to the robot arm (2).

10. A robot hand-held device according to any one of claims 1 to 9, **characterized in that** the second connection flange (14.2) has a second electrical contact group (25.2) which is designed to contact each other electrically in a mechanically coupled state of a tool (11) with a second counter-contact group of the tool (11) in a mechanically coupled state to the second connection flange (14.2) in order to electrically connect the tool (11) with the robot hand-held device (12) and/or to the robotic arm (2).

11. Robotic hand-held apparatus according to claim 9 or 10, **characterized in that** the robotic hand-held apparatus (12) has at least substantially cylindrical housing (26) with at least substantially circular cylindrical shell wall, wherein a circular front of the housing (26) is formed by the first connection flange (14.1) and the opposite other circular front of the housing (26) is separated by the second connection flange (14.2).

12. A robot hand-held device according to any one of claims 1 to 11, comprising a control device (27) which is configured to evaluate sensor signals of the sensor device (15) in a state of the guide handle (17) connected to the first connection means (16.1) of the first connection flange (14.1), in such a way that process forces and/or process torques are detected on the basis of the sensor signals of the sensor device (15) if by moving the guide handle (17) the robot hand-held device (12) connected to a tool flange (8) of a robotic arm (2) with its first connection flange (14.1) is moved together with the robotic arm (2) and thereby a tool (11) connected to the second connection flange (14.2) of the robotic hand-held device (12) is handled.

13. A robotic hand-held device according to any one of claims 1 to 11, comprising a control device (27) which is configured to evaluate sensor signals of the sensor device (15) in a state of the guide handle (17) connected to the second connection means (16.2) of the second connection flange (14.2), in such a way that on the basis of the sensor signals of the sensor device (15) a robot arm (2) in a hand-held operation is controlled in its joint movements, if, by moving the guide handle (17), the robot hand handling device (12) connected to a tool flange (8) of the robot arm (2) with its first connection flange (14.1) is moved together with the robot arm (2).

14. A robotic hand-held device according to any one of claims 1 to 13, **characterized in that** the robotic hand-held device (12) has a third connection flange (14.3) in addition to the first connection flange (14.1) and the second connection flange (14.2), wherein the transmission device (13) arranged between the first connection flange (14.1) and the second connection flange (14.2) forms a first transmission device (13.1) on which a first sensor device (15.1) which is designed to detect the forces and torques transmitted via the first transmission device (13.1) and a second transmission device (13.2) is arranged between the first connection flange (14.1) and the third connection flange (14.3) to which a second sensor device (15.2) is attached which is designed to detect the forces and moments transmitted via the second transmission device (13.2).

15. A robot hand-held device according to claim 14, comprising a control device (27) which is configured to evaluate sensor signals of the second sensor device (15.2) in a state of the guide handle (17) connected to the first connection means (16.1) of the first connection flange (14.1), in such a way that on the basis of the sensor signals of the second sensor device (15.2) a robot arm (2) in a hand-held operation is controlled in its joint movements, and in the state of the guide handle (17) connected to the first connection means (16.1) of the first connection flange (14.1), sensor signals of the first sensor device (15.1) are to be evaluated in such a way that process forces and/or process torques are recorded on the basis of the sensor signals of the first sensor device (15.1) if, by moving the guide handle (17), the guide handle (14.3) connected to its third connection flange (14.3) on a tool flange (8) of the robot arm (2) connected robot hand-held device (12) is moved together with the robotic arm (2) and thereby a tool (11) connected to the second connection flange (14.2) of the robotic hand-held device (12) is handled.

## Revendications

1. Dispositif portatif robotisé comprenant une première bride de raccordement (14.1) qui est conçue pour connecter le dispositif portatif robotique (12) à une bride d'outil (8) d'un bras robotique (2), une seconde bride de raccordement (14.2) qui est conçue pour fixer un outil (11) à manipuler par le bras robotique (2) au dispositif portatif robotique (12), et un dispositif de transmission (13) qui est conçu pour transmettre des forces et des couples entre la première bride de connexion (14.1) et la seconde bride de connexion (14.2) et un dispositif de capteur (15) fixé au dispositif de transmission (13), qui est conçu pour détecter les forces et les couples transmis par l'intermédiaire du dispositif de transmission (13), **est caractérisé en ce que** le dispositif portatif robotisé (12) comporte au moins un premier dispositif de connexion (16.1) qui est relié à la première bride de raccordement (14.1) et qu'au moins un premier dispositif portatif (16.1) est formé pour la connexion amovible d'une poignée de guidage (17) du dispositif portatif robot (12) à la première bride de raccordement (14.1) et dans lequel le dispositif portatif robotisé (12) a, en plus d'au moins un premier dispositif de connexion (16.1), au moins un second dispositif de connexion (16.2) qui est connecté à la deuxième bride de connexion (14.2), et au moins un premier dispositif de connexion (16.1) et au moins un second dispositif de connexion (16.2) sont conçus pour être détachables en option. Connexion de la poignée de guidage (17) du dispositif portatif de robot (12) à la première bride de connexion (14.1) ou à la seconde bride de connexion (14.2) .

2. Dispositif de guidage portatif de robot selon la revendication 1, **caractérisé en ce que** le premier dispositif de connexion (16.1) et le second dispositif de connexion (16.2) ont chacun un dispositif d'accouplement mécanique (18.1, 18.2) qui est conçu pour l'ajustement forcé et/ou l'ajustement mécanique de la poignée de guidage (17) soit avec la première bride de raccordement (14.1) respective, soit avec la seconde bride de raccordement (14.2).

3. Dispositif robotique portatif selon la revendication 2, **caractérisé en ce que** le dispositif d'accouplement mécanique respectif (18.1, 18.2) du premier dispositif de connexion (16.1) et du second dispositif de liaison (16.2) comporte un dispositif mécanique de sécurité (28) qui est conçu pour permettre le fonctionnement de la poignée de guidage (17) exclusivement sur le premier dispositif de connexion (16.1) ou le second dispositif de liaison (16.2).

4. Dispositif robotisé portatif selon l'une quelconque des revendications 1 à 3, **caractérisé en ce que** le premier moyen de connexion (16.1) et le second moyen de connexion (16.2) ont chacun un moyen de contact électrique (19.1, 19.2) qui sont conçus pour connecter électriquement un interrupteur d'activation (20), un interrupteur de confirmation (21) et/ou un interrupteur d'arrêt d'urgence (22) de la poignée de guidage (17) dans une connexion reliée mécaniquement à la première bride de connexion ou à la seconde connexion respective État couplé à la bride de la poignée de guidage (17) avec un dispositif de commande électrique (27, 27a, 27b).

5. Dispositif portatif robotisé selon la revendication 4, **caractérisé par** un dispositif de commande de sécurité (27a) qui est conçu pour permettre le fonctionnement de la poignée de guidage (17) via les moyens de contact électrique respectifs (19.1, 19.2) de la première connexion (16.1) et de la seconde connexion (16.2) exclusivement soit dans un état couplé mécaniquement à la première connexion (16.1), soit dans un état couplé mécaniquement à l'état couplé de la seconde connexion (16.2).

6. Dispositif portatif robotisé selon la revendication 4 ou 5, **caractérisé en ce que** le dispositif de commande électrique (27), le dispositif de commande de sécurité (27a) et/ou une électronique d'évaluation (27b) pour le dispositif de capteur (15) sont logés dans la poignée de guidage (17) et/ou dans le dispositif portatif robot (12) .

7. Dispositif portatif robotisé selon l'une quelconque des revendications 1 à 6, **caractérisé en ce que** le dispositif portatif robotisé (12) présente une première paroi extérieure circonférentielle (23) qui est reliée à la première bride de raccordement (14.1) et qui comporte plusieurs premiers moyens de liaison (16.1) répartis sur la paroi circonférentielle de l'enveloppe extérieure (23) .

8. Dispositif portatif robotisé selon l'une quelconque des revendications 1 à 7, **caractérisé en ce que** le dispositif portatif robotisé (12) comporte une seconde paroi extérieure circonférentielle (24) qui est reliée à la seconde bride de raccordement (14.2) et qui comporte plusieurs seconds moyens de liaison (16.2) répartis sur la paroi circonférentielle de l'enveloppe extérieure (24) .

9. Dispositif portatif robotisé selon l'une quelconque des revendications 1 à 8, **caractérisé en ce que** la première bride de connexion (14.1) comporte un premier groupe de contact électrique (25.1) qui est conçu pour entrer en contact électriquement dans un état mécaniquement couplé du dispositif portatif du robot (12) à un premier groupe de contre-contact sur la bride de l'outil (8) du bras du robot (2) afin de mettre en contact l'interrupteur d'activation (20), Connectez électriquement l'interrupteur de confirmation (21), l'interrupteur d'arrêt d'urgence (22) de la poignée de guidage (17) et/ou du dispositif de capteur (15) au bras du robot (2).

10. Dispositif portatif de robot selon l'une quelconque des revendications 1 à 9, **caractérisé en ce que** la seconde bride de connexion (14.2) comporte un second groupe de contact électrique (25.2) qui est conçu pour entrer en contact électriquement dans un état mécaniquement couplé d'un outil (11) avec un second groupe de contre-contact de l'outil (11) dans un état mécaniquement couplé à la seconde bride de connexion (14.2) afin de connecter électriquement l'outil (11) avec le dispositif portatif de robot (12) et/ou au bras robotique (2).

11. Appareil robotique portatif selon la revendication 9 ou 10, **caractérisé en ce que** l'appareil robotique portatif (12) a un boîtier (26) au moins sensiblement cylindrique avec une paroi de coque cylindrique au moins sensiblement circulaire, dans lequel une façade circulaire du boîtier (26) est formée par la première bride de raccordement (14.1) et l'autre avant circulaire opposé du boîtier (26) est séparé par la seconde bride de raccordement (14.2).

12. Dispositif portatif de robot selon l'une quelconque des revendications 1 à 11, comprenant un dispositif de commande (27) qui est configuré pour évaluer les signaux de capteur du dispositif de capteur (15) dans un état de la poignée de guidage (17) connectée au premier moyen de connexion (16.1) de la première bride de connexion (14.1), de telle manière que les forces de processus et/ou les couples de processus sont détectés sur la base des signaux de capteur du dispositif de capteur ( 15) si, en déplaçant la poignée de guidage (17), le dispositif portatif de robot (12) relié à une bride d'outil (8) d'un bras robotique (2) avec sa première bride de raccordement (14.1) est déplacé avec le bras robotique (2) et qu'ainsi un outil (11) relié à la seconde bride de raccordement (14.2) du dispositif portatif robotisé (12) est manipulé.

13. Dispositif portatif robotisé selon l'une quelconque des revendications 1 à 11, comprenant un dispositif de commande (27) qui est configuré pour évaluer les signaux de capteur du dispositif de capteur (15) dans un état de la poignée de guidage (17) reliée au second moyen de connexion (16.2) de la seconde bride de raccordement (14.2), de telle sorte que, sur la base des signaux de capteur du dispositif de capteur (15), un bras de robot (2) dans un Le fonctionnement est commandé dans ses mouvements d'articulation, si, en déplaçant la poignée de guidage (17), le dispositif de manipulation manuelle du robot (12) relié à une bride d'outil (8) du bras du robot (2) avec sa première bride de connexion (14.1) est déplacé avec le bras du robot (2).

14. Dispositif portatif robotisé selon l'une quelconque des revendications 1 à 13, **caractérisé en ce que** le dispositif portatif robotisé (12) comporte une troisième bride de raccordement (14.3) en plus de la première bride de raccordement (14.1) et de la seconde bride de raccordement (14.2), dans lequel le dispositif de transmission (13) disposé entre la première bride de raccordement (14.1) et la seconde bride de raccordement (14.2) forme un premier dispositif de transmission (13.1) sur lequel repose un premier dispositif de capteur (15.1) qui est conçu pour détecter les forces et les couples transmis par l'intermédiaire du premier dispositif de transmission (13.1) et un second dispositif de transmission (13.2) est disposé entre la première bride de connexion (14.1) et la troisième bride de connexion (14.3) à laquelle est fixé un second dispositif de capteur (15.2) qui est conçu pour détecter les forces et les moments transmis par le second dispositif de transmission (13.2).

15. Dispositif portatif robotisé selon la revendication 14, comprenant un dispositif de commande (27) qui est configuré pour évaluer les signaux de capteur du second dispositif de capteur (15.2) dans un état de la poignée de guidage (17) connectée au premier moyen de connexion (16.1) de la première bride de raccordement (14.1), de telle sorte que, sur la base des signaux de capteur du second dispositif de capteur (15.2), un bras de robot (2) dans une opération manuelle est commandé dans ses mouvements d'articulation, et dans l'état de la poignée de guidage (17) reliée au premier moyen de connexion (16.1) de la première bride de connexion (14.1), les signaux de capteur du premier dispositif de capteur (15.1) doivent être évalués de telle manière que les forces de processus et/ou les couples de processus sont enregistrés sur la base des signaux de capteur du premier dispositif de capteur (15.1) si, En déplaçant la poignée de guidage (17), la poignée de guidage (14.3) reliée à sa troisième bride de raccordement (14.3) sur une bride d'outil (8) du bras de robot (2) connecté au dispositif portatif de robot (12) est déplacée avec le bras robotique (2) et ainsi un outil (11) relié à la deuxième bride de raccordement (14.2) du dispositif portatif de robot (12) est manipulé.
